# EUROPÄISCHE PATENTSCHRIFT

(11) **EP 0 491 808 B1**
(45) Veröffentlichungstag und Bekanntmachung des Hinweises auf die Patenterteilung: **01.09.1993**
(21) Anmeldenummer: 90914051.9
(22) Anmeldetag: 24.09.1990
(51) Int. Cl.: A61C 5/10, A61C 13/08, A61C 19/04

(54) **VERFAHREN UND VORRICHTUNG ZUR INDIVIDUELLEN HERSTELLUNG EINES ZAHNERSATZTEILS**
PROCESS AND DEVICE FOR THE PRODUCTION OF AN INDIVIDUAL TOOTH REPLACEMENT PART
PROCEDE ET DISPOSITIF POUR LA FABRICATION INDIVIDUELLE D'UNE PROTHESE DENTAIRE

(30) Priorität: 22.09.1989 DE 3932149
(43) Veröffentlichungstag der Anmeldung: 01.07.1992
(73) Patentinhaber: ROHLEDER, Peter, D-14167 Berlin (DE)
(72) Erfinder: ROHLEDER, Peter, D-14167 Berlin (DE)
(74) Vertreter: Christiansen, Henning, Dipl.-Ing.
(86) Internationale Anmeldenummer: DE9000729
(87) Internationale Veröffentlichungsnummer: WO9103989

(56) Entgegenhaltungen:
- EP-A- 0 054 785
- US-A- 4 611 288
- US-A- 4 734 034
- US-A- 4 742 464

## Beschreibung

Die Erfindung betrifft ein Verfahren und eine Vorrichtung der im Oberbegriff der Ansprüche 1 und 6 angegebenen Art.

Die Funktion eines aus einer Druckschrift der Firma Siemens ("CEREC - Computer-Reconstruction, Druckvermerk: 0589) bekannt gewordenen Kompaktgerätes für die computergestützte Herstellung von Inlays, Onlays und Schalenverblendungen beruht auf einem optischen Vermessungsprinzip. Dabei wird mittels einer manuell positionierten Videoeinheit ein periodisches, bewegtes Muster paralleler Streifen auf den auszumessenden Zahn- oder Kieferbereich projiziert und die tiefentypischen Verzerrungen mit einer eingebauten Kamera aufgenommen. Nachteilig hierbei ist neben der manuellen Kameraführung vor allem die das Videobild überlagernde Darstellung der Meßinformation, die nicht unmittelbar auswertbar ist. Die Interpretation der resultierenden graphischen Muster stellt hohe Anforderungen an das räumliche Vorstellungsvermögen des behandelnden Zahnarztes. Wegen seiner transparenten Struktur und seiner spiegelnden Oberfläche muß der Zahnschmelz vor Anwendung des CEREC-Verfahrens mit einer dünnen Pulverschicht vorpräpariert sein.

Ein Verfahren und eine Vorrichtung gemäß dem ersten Teil der Ansprüche 1 und 6 sind aus der EP-A-0 054 785 bekannt.

Der Erfindung liegt die Aufgabe zugrunde, ein Verfahren und eine Vorrichtung anzugeben, um mit computergestützten Mitteln die Paßgenauigkeit von Zahnersatz insbesondere im Hinblick auf den individuellen Biß des Patienten zu verbessern.

Diese Aufgabe wird mit den kennzeichnenden Merkmalen der Ansprüche 1 bzw. 6 gelöst.

Die Erfindung beruht zunächst auf der Erkenntnis, daß - im Gegensatz zur bekannten zweidimensionalen visuellen Erfasssung - nur die dreidimensional abgetastete Oberfläche des Gegenbisses eine exakte Paßform des Bisses sicherstellen kann. Dabei werden von einer gedachten horizontalen Bezugsebene (x-y-Richtung) aus, die parallel zur Bißebene gelegen ist, Bereiche ermittelt, für die die Zahnoberflächen von Ober- und Unterkiefer gleiche Höhenwerte aufweisen, also bei geschlossenem Kiefer aufeinander zu liegen kommen und somit den Biß (Okklusion) bestimmen.

Bei der Erfindung lassen sich für den Fall, daß die Höhenwerte der Zahnoberflächen durch getrennte Messungen in unterschiedlichen Richtungen bestimmt werden müssen, durch entsprechene relative Verschiebung der in Speichern festgehaltenen Höhenwerte in Zuordnung zu den Koordinaten der x-y-Ebene abgleichen, um eine seitliche Verschiebung des Bisses zu kompensieren. Abgleichkriterium ist dabei eine Maximierung der Anzahl der übereinstimmenden ermittelten Höhenwerte, entsprechend einer maximalen Fläche von bei geschlossenem Biß aufeinander gelegenen Zahnbereichen.

Auf diese Weise wird die optimale Bißlage für den Gesamtkiefer ermittelt, welche an und für sich bereits ausreichend wäre, um im Bereich von Zahndefekten durch Abnahme der Form der Zahnoberfläche des Gegenkiefers die maximale Ausdehnung des Zahnersatzes in Höhenrichtung zu bestimmen, so daß auch der Zahnersatz eine exakte Bißform bietet. Hierbei ist allerdings zunächst zu berücksichtigen, daß die im Biß aneinander anliegenden Bereiche der Zahnoberflächen des Gegenkiefers meist einander nur tangieren. Die übrigen Bereiche des Zahnersatzes sind also aus einem Modell zu ergänzen, welches eine Anzahl von natürlich wirkenden Zahnformen gespeichert enthält.

Eine optimale Erzeugung einer Okklusion bietet das vorgenannte Verfahren jedoch noch nicht: Oftmals weicht nämlich der sich tatsächlich einstellende Biß eines Patienten von dem theoretisch sich einstellenden optimalen Biß ab.

Hierfür wird nun gemäß der Erfindung zusätzlich eine Anordnung verwendet, welche ein ebenes Bild des tatsächlichen Bisses des Patienten wiedergibt. Dazu sind elektronische Bißfolien bekannt, welche in Bereichen, in denen ein vorgegebener Anpreßdruck überschritten wird, jeweils ein Kontaktpaar einer Kontaktmatrix schließen und somit einem die sich kreuzenden Matrixleitungen scannend abtastenden Computer ein in einem Speicher festzuhaltendes Bild des tatsächlichen Bisses übermitteln.

Nach der Erfindung wird dieses tatsächliche Bißbild nun als Bezug herangezogen für die Ausrichtung der in den entsprechenden Speichern festgehaltenen Abbildungen der Zahnoberflächen von Unter- und Oberkiefer. Durch relative Verschiebung der gespeicherten Höhenwerte von Ober- und Unterkiefer wird angestrebt, eine relative Position der Abbildungen von Ober- und Unterkiefer hinsichtlich der in dem Speicher festgehaltenen Daten in der Weise zu erzielen, daß die übereinstimmenden Höhenwerte, d.h. diejenigen Werte, welche beim im Speicher vorhandenen nachgebildeten Biß aufeinander zu liegen kommen, mit dem mittels der Bißfolie erfaßten realen Biß zusammenfallen, so daß die gespeicherte Nachbildung des Gebisses die Position des Gebisses beim tatsächlichen Biß einnimmt.

Auf diese Weise gelingt es, ein durch scannende Abtastung gefundenes Bißbild, das nur zwei in getrennten Aufnahmen erfaßt werden kann, durch Prozessormittel über eine Verschiebung der Datenwerte im Speicher relativ zur Bißebene in die Position des realen Bisses zu überführen, so daß die für Gebißreparatur ermittelten Werte des Gegenbisses aus dieser realen Bißlage entnommen werden und der Zahnersatz entsprechend herstellbar ist.

Dabei ist insbesondere ein Scanner zur optischen Abtastung des interessierenden Kieferbereiches mit einer Tiefenmeßeinrichtung verbunden, wobei die Ansteuersignale für den Scanner gleichzeitig Adreßwerte eines Meßwertspeichers bilden. Eine angeschlossene Auswerteeinheit dient der Ermittlung und dreidimensionalen Darstellung der Oberflächenkoordinaten der vermessenen Ober- und Unterkieferzähne. Okklusion und Artikulation werden über eine mit einer drucksensitiven Bißfolie versehenen, vorzugsweise U-förmig gestalteten Bißgabel festgestellt. Die durch den Zahndruck ausgelösten Kontakte werden den Abbildern der Ober- und Unterkieferzähne überlagert. Die Relativlage der Abbilder des Unterkiefers, des Oberkiefers und des Bißabdruckes ist vorzugsweise mittels Maussteuerung veränderbar, so daß eine eindeutige, der Okklusion entsprechende Zuordnung der Ober- und der Unterkieferzähne einstellbar ist. Auf diese Weise lassen sich auch bei dem Patienten fehlende Zahnbereiche im Hinblick auf ihre vorhandenen Antipoden paßgenau ergänzen.

Im Hinblick auf Zahnbereiche, die nicht Teil der Okklusionen sind, kann dabei ergänzend auf gespeicherte Ideal- oder Mittelwertformen entsprechender Größe unter Berücksichtigung eines angepaßten Übergangs zurückgegriffen werden.

Eine sich anschließende Rechnereinheit verarbeitet diese graphisch ermittelten Überlagerungen zu Oberflächenkoordinaten des herzustellenden Zahnersatzzteiles. Dafür werden neben den ausgemessenen Zahnkonturen und der individuellen Okklusion vorzugsweise auch abgespeicherte Konturen eines gleichartigen defektlosen Idealzahnes oder einer entsprechenden Zahngruppe zugrundegelegt. Über einen Wandler werden die ermittelten Daten an das Format der Eingangsdaten einer numerisch gesteuerten Werkzeugmaschine angepaßt. Diese dient dem automatischen Ausfräsen und gegebenenfalls dem Schleifen und Polieren des Zahnersatzteiles.

Entsprechend einer vorteilhaften Weiterbildung der Erfindung ist zur Führung des Meßstrahles über den zu vermessenden Kieferbereich mindestens ein mittels der Ansteuermittel scannend bewegbarer Umlenkspiegel oder/und mindestens ein Prisma vorgesehen. Zur Bewegung dient dabei bevorzugt eine Doppelschlittenführung nach dem Prinzip eines Plotters.

Die Ansteuermittel erzwingen einen bestimmten Bewegungsablauf der Umlenkelemente und damit ein Durchmustern der Oberfläche. Da den Ansteuersignalen in eindeutiger Weise ebene Koordinaten (x; y) der Projektion des Meßstrahles auf den auszumessenden Zahn- oder Kieferbereich zugeordnet sind, entspricht jedem Wertepaar Ansteuersignal/Meßwert [(x; y)/(z)] genau ein Raumpunkt. Die Speicherung der Wertepaare erfolgt vorteilhafterweise in einem RAM-Festwertspeicher , wobei die Ansteuersignale die Adreßwerte bilden. Damit ist die Voraussetzung für eine bequeme Weiterverarbeitung der Daten gegeben.

Die Ermittlung der Abstandsmeßwerte erfolgt im wesentlichen nach bekannten optischen Verfahren, beispielsweise dem Triangulationsverfahren oder dem Verfahren der dynamischen Fokussierung. Dementsprechend ist der Meßstrahl ein Laserstrahl oder ein Lichtstrahl, dessen Wellenlänge vorzugsweise im Infrarot-Bereich liegt. Als lichtelektrischer Empfänger ist vor allem eine Fotodetektoranordnung aber auch ein CCD-Target geeignet.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine Draufsicht einer Abtastvorrichtung in schematisierter Darstellung,
Figur 2 eine Baugruppenübersicht zur Meßwertverarbeitung für die automatische Herstellung eines Zahnersatzteiles sowie
Figur 3 eine Draufsicht auf ein Ausführungsbeispiel einer "elektronischen Bißfolie".

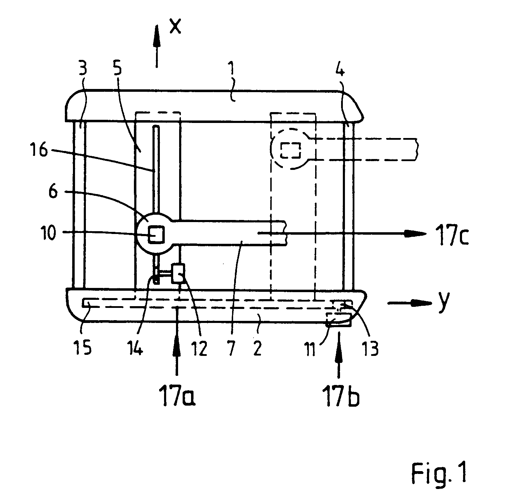

Die in Figur 1 wiedergegebene Abtastvorrichtung besteht im wesentlichen aus zwei parallelen Führungen in Form von Schienen 1 und 2, die durch in Form von Abstandhaltern ausgebildeten Streben 3 und 4 starr miteinander verbunden sind, einem auf den Schienen 1 und 2 beweglichen, eine Traverse bildenen Wagen 5 und einem auf dieser Traverse verschieblichen Läufer 6, welcher auf dem Wagen 5 senkrecht zum Verlauf der Schienen 1 und 2 verschiebbar ist. Die Traverse 6 kann durch seine eigene Verschiebbarkeit auf dem Wagen 5 und durch die Verschiebbarkeit des Wagens 5 jeden Punkt einer zwischen den Schienen 1 und 2 aufgespannten Ebene erreichen. Über einen mit dem Läufer 6 fest verbundenen Strahlführungskanal 7, der etwa die Länge einer Schiene 1 bzw. 2 aufweist, ist in einem gemeinsamen Gehäuse sowohl die Strahlungsquelle als auch der Empfänger des Meßstrahles 8 mit einer auf dem Läuferelement 6 befindlichen Meßeinheit 10 verbunden. Strahlungsquelle und Empfänger werden demzufolge mit dem Läufer mitbewegt. Die Meßeinheit 10 bildet eine komplette Entfernungsmeßeinrichtung, welche den Abstand eines unterhalb der Meßeinheit befindlichen Hindernisses ermittelt und ein Signal ausgibt, welches repräsentativ für diese, auf einen Punkt des Läufers bezogene Entfernung, ist. Bei einem nach dem Prinzip der dynamischen Fokussierung arbeitenden System, wie es dem Abtaster eines CD-Spielers entspricht, dynamisch nachgeführt wird und die bei Scharfeinstellung sich ergebende Positionsinformation als Abstandsmeßwert übermittelt.

Die Ansteuerung des Wagens 5 und des Läufers 6 erfolgt entsprechend einem Plotter über miniaturisierte elektrische Antriebsmotore. Figur 1 zeigt zwei unterschiedliche Positionen der mit Wagen 5 und Läufer 6 verschobenen Meßanordnung. Der Antrieb des Wagens 5 und des Läufers 6 kann beispielsweise über Schrittmotoren 11 und 12 vorgenommen werden, deren Mitnehmer 13 und 14 jeweils eine der Schienenlänge bzw. der Wagenlänge angepaßte, spindelförmige Schnecke 15 bzw. 16 in Drehung versetzen, wobei der Wagen 5 und der Läufer 6 mittels Zahnstangen in die Schnecken 15 und 16 eingreifen und dadurch bewegt werden. Die Spannungsverläufe der Steuerspannungen für die Motoren 11 und 12, die den einzustellenden x/y-Werten der jeweils einzuhaltenden Position zugeordnet sind, werden von einer externen Baugruppe 17 her zugeführt und in Form von codierten Steuersignalen 17a (x-Position) und 17b (y-Position) codiert zugeführt, so daß sie vorteilhafterweise gleichzeitig die Adressenwerte für die spätere Speicherung der ermittelten Meßwerte (z-Position), die am Ausgang 17c erhalten werden, bilden können. Der Läufer 6 mit dem Meßsystem 10 und der Traverse des Wagens 5 entspricht in seiner Ausgestaltung der Führung eines Abtasters bei einem üblichen CD-Spieler, so daß die entsprechenden am Markt erhältlichen miniaturisierten Bauelemente großteils bei der Konstruktion benutzt werden können.

Die Abstandsabtastung kann auch nach anderen physikalischen Verfahren erfolgen, wobei das der Triangulation zu nennen ist. Günstig sind auch solche Verfahren, welche ein Echosignal erzeugen, dessen Verzögerung einen Rückschluß auf den Tiefenabstand zuläßt und beispielsweise mittels Ultraschall oder Mikrowelle arbeiten.

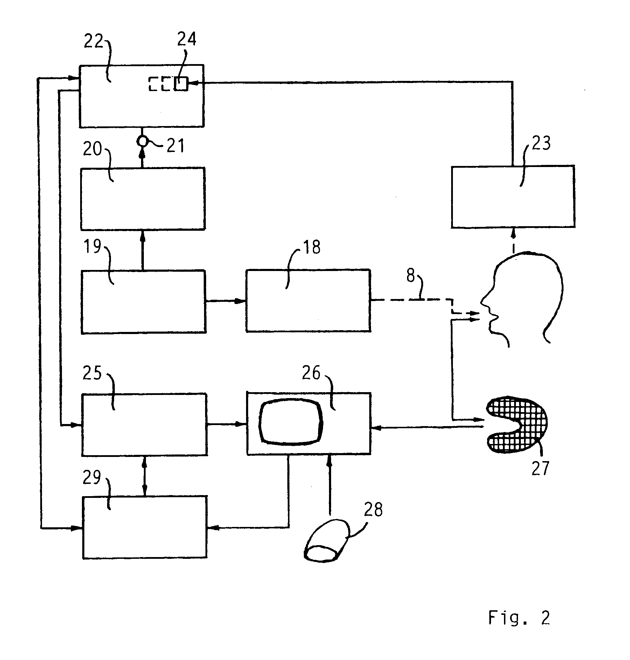

In Figur 2 ist eine Baugruppenübersicht zur Meßwertverarbeitung für die automatische Herstellung eines Zahnersatzteiles, insbesondere einer Krone oder einer Brücke, unter Berücksichtigung der Okklusion und der Artikulation wiedergegeben. Eine Abtastvorrichtung 18, beispielsweise auf der Basis der in Figur 1 dargestellten Bauart, wird von einer externen Steuerung 19 derart angesteuert, daß der Meßstrahl mit einem bestimmten Bewegungsablauf über das zu vermessende Zahngebiet geführt wird. Jedem Ansteuersignal ist dabei ein eindeutiger Punkt der Scanningebene zugeordnet. Die Steuerung 19 ist über eine Codiereinrichtung 20 mit dem Adresseneingang 21 eines RAM-Festwertspeichers 22 verbunden, während die Meßsignale über eine Meßwertermittlung 23 direkt in die zugeordneten Speicherplätze 24 gelangen. Ein mit dem Speicher 22 verbundener Rechner 25 verarbeitet die ermittelten und gespeicherten Oberflächenkoordinaten des Oberkieferbereiches und des zugeordneten Unterkieferbereiches, wodurch beide Bereiche als dreidimensionale Grafiken auf einem angeschlossenen Monitor 26 darstellbar sind. An den Monitor 26 angeschlossen ist außerdem eine U-förmig gestaltete Bißgabel 27 aus drucksensitiver Folie, welche zur Feststellung der terminalen Okklusion und der Artikulation dient. Die ermittelten Druckpunkte bzw. Druckzonen werden auf dem Monitor 26 im gleichen Maßstab wie der Oberkiefer- und der Unterkieferbereich abgebildet. Die Oberfläche der Bißgabel 27 ist zur besseren Positionierung im Munde in ein Wachsbad getaucht worden. Die Sterilisation der Bißgabel 27 ist problemlos mit Dampfstrahler und/oder Thermodesinfektor bzw. in den praxisüblichen Sterilisatoren durchführbar. Auch die Beschichtung mit einer neuen Wachsschicht ist ohne großen Aufwand möglich. Über eine Maussteuerung 28 wird das Abbild der Bißgabel 27 mit den entsprechenden Punkten des Unterkieferabbildes und des Oberkieferabbildes in Deckung gebracht. Eine Auswerteeinheit 29 zur Ermittlung der Konturen des herzustellenden Zahnersatzteiles ist sowohl mit dem Rechner 25 als auch mit dem Monitor 26 und dem Speicher 22 verbunden, wobei die Monitorgrafik, die eine eindeutige Zuordnung von Ober- und Unterkiefer wiedergibt, in der Weise berücksichtigt wird, daß sich die zu ermittelnden Konturen in die gegebene Okklusion bzw. Artikulation einfügen. Gleichzeitig werden die in dem Speicher 22 enthaltenen Daten eines defektlosen Idealzahnes oder Idealzahngebietes zur Vervollständigung der fehlenden Begrenzungsflächen des Zahnersatzes herangezogen. Die Ausgangsdaten der Auswerteeinheit 29 charakterisieren einen vermessenen Negativabdruck eines Zahndefektes bzw. einer Zahnlücke, der nach dentologischen Gesichtspunkten unter Berücksichtigung der Okklusion und der Artikulation derart vervollständigt wurde, daß die Umrisse des herzustellenden Zahnersatzes damit gegeben sind. Diese Daten werden einem Wandler zur Anpassung an das Format der Eingangsdaten einer numerisch gesteuerten Werkzeugmaschine zugeführt und dienen dann zur Ansteuerung der Werkzeugmaschine 31, insbesondere einer Fräsmaschine, welche das Zahnersatzteil in individuell passender Form aus einem Rohling ausfräst.

Bei der so dargestellten Vorrichtung zur individuellen Herstellung eines Zahnersatzteiles, insbesondere einer Krone oder eines Gebißteiles unter Verwendung eines, insbesondere optischen, Systems zur Zahndefekterkennung und einer numerisch gesteuerten Werkzeugmaschine, wobei die Steuersignale computergestützt von dem vermessenen Zahndefekt abgeleitet sind, sind somit vorgesehen: eine Ansteuereinheit (19) zur, insbesondere scannenden, Führung des Meßstrahles (8) und Erzeugung von dreidimensionalen Abbildern von einander zugewandten Bereichen von Ober- und Unterkiefer durch punktweise Abtastung, ein Meßwertspeicher (22) für die Speicherung der Abbilder von Unter- und Oberkiefer in Form von einzelnen, den Meßpunkten entsprechenden Meßwertdaten als erster Datensatz, eine drucksensitive Bißfolie (27), eine Einheit zur zweidimensionalen Erfassung von Bereichen der Bißfolie, in denen bei einem Probebiß des Patienten ein vorgegebener Anpreßdruck überschritten wird, und Speicherung dieser Koordinatenwerte als Daten in einem zweiten Datensatz, eine Rechnereinheit (25) zur Ermittlung von Bereichen, in denen die vertikalen Komponenten, unter Berücksichtigung der horizontalen Bezugsebenen für die jeweils für Ober-und Unterkiefer und der unterschiedlichen Meßrichtung, getrennt erfaßten Meßwerte eine übereinstimmende Höhenkomponente haben, und Speicherung dieser zweidimensionalen Daten in einem dritten Datensatz, elektronische Komponenten zur möglichst weitgehenden Überlagerung des zweiten und dritten Datensatzes, wobei die Daten des zweiten Datensatzes dem dritten Datensatz bezüglich ihrer Kordinatenwerte möglichst vollständig einbeschrieben sein sollen, insbesondere durch gleichmäßige Änderung der horizontalen Koordinatendaten für alle Punkte des zweiten Datensatzes relativ zu den Koordinaten des dritten Datensatzes, sowie das Ergänzen von im Ober- bzw. Unterkiefer fehlenden und daher nicht erfaßten Zahnbereichen entsprechend den Koordinaten der in diesen Bereichen ermittelten Höheninformationen des Gegenkiefers wieder unter Berücksichtigung der horizontalen Bezugsebenen.

Auf diese Weise lassen sich auch fehlende Bereiche entsprechend dem individuellen Biß ergänzen. Die zwischen den Okklusionen und den restlichen Zahnbereichen vorhandenen Bezirke werden in optimaler Anpassung der Übergangsbereiche nach vorhandenen (gespeicherten) Zahnmustern ergänzt.

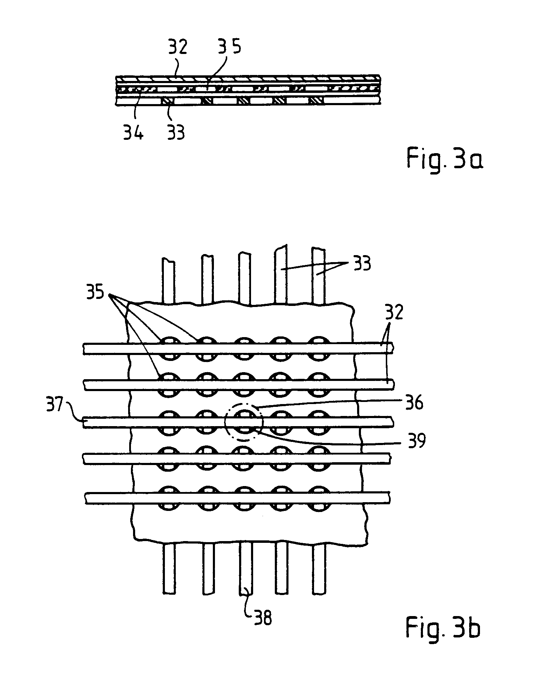

Ein Ausführungsbeispiel für den Aufbau einer drucksensitive Folie ist in den Figuren 3a in einem Schnittbild und 3b in einer Draufsicht wiedergegeben. Die Folie besteht im wesentlichen aus zwei Schichten gekreuzter Drähte,32 und 33, die durch eine gummiartige Isolationsschicht 34 voneinander getrennt sind, wobei die Isolationsschicht an den Kreuzungspunkten der Drähte jeweils ein Loch 35 aufweist. Bei Druck auf die Stelle 36 beispielsweise wird die gummiartige Isolationsschicht zusammengepreßt, so daß sich die Drähte 37 der Schicht 32 und 38 der Schicht 33 innerhalb des Loches 39 berühren. Dadurch wird ein Kontakt geschlossen, der ein elektrisches Element einer nicht dargestellten Schaltung irreversibel in einen anderen Zustand setzt. Auf diese Weise läßt sich jeder Druckpunkt registrieren und zu einem beliebigen Zeitpunkt über einen Monitor darstellen.

Die Erfindung beschränkt sich in ihrer Ausführung nicht auf das vorstehend angegebene bevorzugte Ausführungsbeispiel. Vielmehr ist eine Anzahl von Varianten denkbar, wie sie in den abhängigen Ansprüchen augegeben sind.

## Patentansprüche

1. Verfahren zur individuellen Herstellung eines Zahnersatzteiles, insbesondere einer Krone oder eines Gebißteiles unter Verwendung eines Systems zur Zahndefekterkennung und einer numerisch gesteuerten Werkzeugmaschine, wobei Steuersignale für die Werkzeugmaschine computergestützt von dem vermessenen Zahndefekt abgeleitet sind,
**gekennzeichnet durch**
die Verfahrenschritte:
Führung eines Meßstrahles (8) über ein zu vermessendes Zahngebiet und Erzeugung jeweils eines dreidimensionalen Abbildes von einander zugewandten Zahnbereichen des Ober- und Unterkiefers durch punktweise Abtastung der Koordinaten der Bißebene (xy-Ebene) oder einer zur Bißebene parallelen Bezugsebene, und Ermittlung der den x,y-Koordinatenwerten zugeordneten Höhenwerte (z- bzw. -z-Richtung),
Speicherung der dreidimensionalen Abbilder von Unter-und Oberkiefer in form von einzelnen, den x,y-Koordinaten entsprechenden Höhenwerten als erste bzw. zweite Teildaten eines ersten Datensatzes,
zweidimensionale Erfassung von Bereichen, in denen bei einem Probebiß des Patienten ein vorgegebener Anpreßdruck überschritten wird, und Speicherung der diesen Bereichen zugehörigen Koordinatenwerte der Bißebene (xy-Ebene) als zweiter Datensatz,
Ermittlung von Bereichen der Bißebene (xy-Ebene), in denen die Höhenwerte (z- bzw. -z-Richtung) der ersten und zweiten Teildaten des ersten Datensatzes unter Berücksichtigung der jeweiligen Meßrichtung, für identische x,y-Koordinatenwerte übereinstimmen und Speicherung der diesen Bereichen zugehörigen Koordinatenwerte der Bißebene als dritter Datensatz,
möglichst weitgehende Überlagerung der Daten des zweiten und dritten Datensatzes derart, daß die Werte des zweiten Datensatzes mit den Werten des dritten Datensatzes möglichst vollständig zusammenfallen, insbesondere durch Veränderung der Koordinaten der Bißebene für alle Punkte des zweiten Datensatzes relativ zu den Koordinaten des dritten Datensatzes, wobei die Koordinaten der Punkte, für die nach der Überlagerung die Werte des zweiten und dritten Datensatzes zusammenfallen, einen vierten Datensatz bilden, sowie
Ergänzen von fehlenden Höhenwerten (z- bzw. -z-Richtung) im Ober- bzw. Unterkiefer im Bereich von Zahndefekten durch die für die jeweiligen x,y-Koordinaten in diesem Bereich entsprechenden Höhenwerte des Gegenkiefers des ersten Datensatzes und Speicherung der Koordinatenwerte als fünfter Datensatz, wobei die Höhenwerte auf die Bißebene (xy-Ebene) bezogen sind.

2. Verfahren nach Anspruch 1, **gekennzeichnet durch** durch die Eingabe der Koordinaten eines Bereichs der Bißebene, in welchem ein Zahndefekt vorliegt, mindestens als Teil des fünften Datensatzes.

3. Verfahren nach Anspruch 1 oder 2, **dadurch gekennzeichnet**, daß die Werte des zweiten, dritten, vierten und/oder fünften Datensatzes als logische Werte gespeichert und während der Verarbeitung mittels logischer UND-Verknüpfung verbunden werden.

4. Verfahren nach einem der Ansprüche 1 bis 3, **dadurch gekennzeichnet**, daß bei der Überlagerung von Daten des zweiten und dritten Datensatzes nacheinander verschiedene für unterschiedliche relative Positionen von Ober- und Unterkiefer zueinander erzeugte dritte Datensätze mit dem zweiten Datensatz verglichen werden und derjenige Datensatz als vierter Datensatz ausgewählt wird, für den eine maximale Übereinstimmung der Daten des dritten Datensatzes mit dem zweiten Datensatz besteht.

5. Verfahren nach einem der Ansprüche 2 bis 4 , **gekennzeichnet durch** das Ergänzen von Koordinatenwerten für Bereiche der Bißebene, in denen ein Zahndefekt vorliegt, welche Koordinatenwerte einen fünften Datensatz bilden, durch die Koordinatenwerte eines in einem Modellspeicher enthaltenen Zahnmodells, welche einen sechsten Datensatz bilden, unter kontinuierlichem Anschluß an die gemessenen und verarbeiteten Höhenwerte.

6. Vorrichtung zur Durchführung des Verfahrens nach einem der vorangehenden Ansprüche,
**gekennzeichnet durch**
eine Meßanordnung mit einer Ansteuereinheit (19) zur, insbesondere scannenden, Führung eines Meßstrahles (8) über ein zu vermessendes Zahngebiet und Erzeugung jeweils eines dreidimensionalen Abbildes von einander zugewandten Zahnbereichen des Ober- und Unterkiefers durch punktweise Abtastung der Koordinaten der Bißebene (xy-Ebene) oder einer zur Bißebene parallelen Bezugsebene, und Ermittlung der zugeordneten Höhenwerte (z- bzw -z-Richtung),
einen Meßwertspeicher (22) für die Speicherung der dreidimensionalen Abbilder von Unter- und Oberkiefer in form von einzelnen, den Meßpunkten entsprechenden Koordinaten als erste bzw. zweite Teildaten eines ersten Datensatzes,
eine den Gebißdruck in der Ebene des Bisses ermittelnde Anordnung (27),
eine Einheit zur zweidimensionalen Erfassung von Bereichen der den Gebißdruck ermittelnden Anordnung, in denen bei einem Probebiß des Patienten ein vorgegebener Anpreßdruck überschritten wird, und Speicherung der Ergebnisse in Abhängigkeit von den zugehörigen x,y-Koordinatenwerten der Bißebene (xy-Ebene) als zweiter Datensatz,
eine Rechnereinheit (25) zur Ermittlung von Bereichen der Bißebene (xy-Ebene), in denen die Höhenwerte (z- bzw. -z-Richtung) der ersten und zweiten Teildaten des ersten Datensatzes, jeweils für Ober- und Unterkiefer, unter Berücksichtigung der jeweiligen Meßrichtung, für identische x,y-Koordinatenwerte übereinstimmen, und zur Speicherung der Ergebnisse in Abhängigkeit von den zugehörigen Koordinatenwerten der Bißebene als mindestens ein dritter Datensatz in dem Meßwertspeicher,
eine Abgleicheinheit zur möglichst weitgehenden Überlagerung der Daten des zweiten und dritten Datensatzes, wobei die Koordinatenwerte des zweiten Datensatzes mit den Koordinatenwerten des dritten Datensatzes möglichst vollständig zusammenfallen sollen, insbesondere durch Veränderung der x,y-Koordinaten der Bißebene für alle Punkte des Zweiten Datensatzes relativ zu den x,y-Koordinaten des dritten Datensatzes, sowie
eine Einheit zum Ergänzen von Höhenwerten im Ober- bzw. Unterkiefer im Bereich von Zahndefekten durch die für die jeweiligen x,y-Koordinaten in diesen Bereich ermittelten Höhenwerte des Gegenkiefers des ersten Datensatzes als fünfter Datensatz, wobei die Höhenwerte auf die Bißebene bezogen sind.

7. Vorrichtung nach Anspruch 6, **dadurch gekennzeichnet**, daß eine Eingabevorrichtung vorgesehen ist, zur Eingabe eines Koordinatenbereichs der Bißebene, in welchem ein Zahndefekt vorliegt.

8. Vorrichtung nach Anspruch 7, **dadurch gekennzeichnet**, daß die Abgleicheinheit und/oder die Einheit zum Ergänzen Mittel zur logischen UND-Verknüpfung der Werte des zweiten, dritten, vierten und/oder fünften Datensatzes als gespeicherte logische Werte aufweist.

9. Vorrichtung nach einem der Ansprüche 6 bis 8 , **gekennzeichnet durch** eine Approximationsanordnung zum Ergänzen von Höhenwerten in Bereichen der Bißebene, in denen ein Zahndefekt vorliegt, durch die entsprechenden Höhenwerte eines in einem Modellspeicher enthaltenen Zahnmodells unter kontinuierlichem Anschluß an die ergänzten Höhenwerte.

10. Vorrichtung nach einem der Ansprüche 6 bis 9 , **gekennzeichnet durch** einen Laser zur Erzeugung des Meßstrahls (8).

11. Vorrichtung nach einem der Ansprüche 6 bis 9 , **dadurch gekennzeichnet,** daß die Wellenlänge des Meßstrahls (8) im Infrarot-Bereich liegt.

12. Vorrichtung nach einem der Ansprüche 6 bis 11 , **dadurch gekennzeichnet,** daß als Empfänger und zur Meßwertermittlung Fotodetektoren mit anschließender Differenzverstärkerschaltung vorgesehen sind.

13. Vorrichtung nach einem der Ansprüche 6 bis 11, **dadurch gekennzeichnet,** daß als Empfänger ein CCD-Target vorgesehen ist.

14. Vorrichtung nach einem der Ansprüche 6 bis 13, **dadurch gekennzeichnet**, daß die den Gebißdruck ermittelnde Anordnung eine drucksensitive Bißfolie (27) ist.

15. Vorrichtung nach Anspruch 14, **dadurch gekennzeichnet**, daß die drucksensitive Bißfolie (27) als U-förmige Bißgabel ausgebildet ist.

16. Vorrichtung nach einem der vorangehenden Ansprüche, **gekennzeichnet durch** eine Maussteuerung (28) und ein Display, wobei die Relativlage der Abbilder in form von Datensätzen mit Hilfe einer Maussteuerung (28) veränderbar ist und die Beurteilung des Abgleichs mittels eines Displays erfolgt, welches die Datensätze jeweils in überlagerter Darstellung wiedergibt.

## Claims

1. A process for preparing individually a dental prosthesis, more particularly a crown or a denture part by the use of a system for detecting dental defects and a numerically controlled machine tool, the control signals for the machine tool being derived from the dental defect measured, with the aid of a computer, characterised by the following process steps:
guiding a measuring beam (8) across a dental zone to be measured and producing accordingly a three-dimensional picture of facing dental regions of the upper and lower jaw by scanning, point by point, the coordinates of the biting plane (xy-plane) or of a reference plane parallel to the biting plane, and ascertaining the altitude values (z- or -z-direction) associated with the x,y-coordinates,
storing the three-dimensional pictures of the upper and lower jaw in the form of individual altitude values, corresponding to the x,y-coordinates, as first or second partial data of a first set of data,
two-dimensional recording of regions, in which a predetermined contact pressure is exceeded by a sample bite taken from the patient, and storing the coordinate values of the biting plane (xy-plane) associated with said regions, as a second set of data,
detecting regions of the biting plane (xy-plane), in which the altitude values (z- or -z-direction) of the first and second partial data of the first data set conform in respect of identical x,y-coordinate values, while taking account of the relevant direction of measurement, and storage of the coordinate values of the biting plane, associated with said regions, as a third set of data,
superimposing the data of the second and third data set as much as possible such that the values of the second data set coincide with the values of the third data set as fully as possible, more particularly by changing the coordinates of the biting plane in respect of all the points of the second data set, relative to the coordinates of the third data set, the coordinates of the points, in respect of which the values of the second and third data set coincide after superposition, forming a fourth set of data, as well as supplementing missing altitude values (z- or -z-direction) of the upper or lower jaw within the region of dental defects by the corresponding altitude values of the opposite jaw of the first data set, obtained in respect of the respective x,y-coordinates in said region, and storage of the coordinate values as a fifth set of data, the altitude values being based on the biting plane (xy-plane).

2. A process according to claim 1, characterised by the input of the coordinates of an area of the biting plane in which there is a dental defect, at least as part of the fifth set of data.

3. A process according to either claim 1 or 2, characterised in that the values of the second, third, fourth and/or fifth data set are stored as logical values and linked during the processing by means of logical AND-interconnection.

4. A process according to any one of claims 1 to 3, characterised in that, when the data of the second and third data set are superimposed, various third data sets, produced in respect of different positions of the upper and lower jaw relative to one another, are successively compared with the second data set, and that data set is chosen as fourth data set, in respect of which there is a maximum conformity of the data of the third data set with the second data set.

5. A process according to any one of claim 2 to 4, characterised by supplementing coordinate values for regions of the biting plane, in which there is a dental defect, which coordinate values form a fifth data set, by coordinate values of a dental cast contained in a cast memory, which coordinates values form a sixth data set, while continuously connecting them to the measured and processed altitude values.

6. A device for carrying out the process according to any one of the preceding claims, characterised by a measuring arrangement comprising a control unit (19) for guiding a measuring beam (8), more particularly by scanning, across a dental region to be measured, and for producing accordingly a three-dimensional picture of facing dental regions of the upper and lower jaw, by the point-by-point scanning of the coordinates of the biting plane (xy-plane) or of a reference plane parallel to the biting plane, and determining the associated altitude values (z- or -z-direction),
a measurement memory (22) for storing the three-dimensional pictures of the lower and upper jaw in the form of individual coordinates corresponding to the measuring points, as first or second partial data of a first data set,
an arrangement (27) for detecting the bite pressure in the biting plane,
a unit for the two-dimensional recording of regions of the arrangement for detecting the bite pressure, in which regions a predetermined contact pressure is exceeded when a bite sample is taken from the patient, and storage of the results obtained as a function of the associated x,y-coordinate values of the biting plane (xy-plane), as a second set of data,
a computing unit (25) for detecting the regions of the biting plane (xy-plane), in which the altitude values (z- or -z-direction) of the first and second partial data of the first data set, in the case of the upper and lower jaw respectively, conform in respect of identical x,y-coordinate values, while taking account of the respective measuring direction, and for storing the results obtained as a function of the associated coordinate values of the biting plane in the measurement memory, as at least a third set of data,
an adjustment unit for as great as possible a super-position of the data of the second and third data set, the coordinate values of the second data set being intended to coincide with the coordinate values of the third data set as fully as possible, more particularly by changing the x,y-coordinates of the biting plane, in respect of all the points of the second data set, relative to the x,y-coordinates of the third data set, as well as
a unit for supplementing altitude values in the upper or lower jaw within the region of dental defects by altitude values of the opposite jaw of the first data set, which altitude values were detected in respect of the relevant x,y-coordinates in said region, as a fifth set of data, the altitude values being based on the biting plane.

7. A device according to claim 6, characterised in that an input device is provided for inputting a coordinate region of the biting plane, in which there is a dental defect.

8. A device according to claim 7, characterised in that the adjustment unit and/or the supplementing unit have means for the logical AND-interconnection of the values of the second, third, fourth and/or fifth data set as stored logical values.

9. A device according to any one of claims 6 to 8, characterised by an approximation arrangement for supplementing altitude values within the regions of the biting plane, in which there is a dental defect, by the corresponding altitude values of a dental cast contained in a cast memory, while continuously connecting them to the supplemented altitude values.

10. A device according to any one of claims 6 to 9, characterised by a laser for producing the measuring beam (8).

11. A device according to any one of claims 6 to 9, characterised in that the wavelength of the measuring beam (8) is within the infra-red range.

12. A device according to any one of claims 6 to 11, characterised in that photo detectors are provided to receive and detect measured values, to which detectors a differential gain circuit is connected.

13. A device according to any one of claim 6 to 11, characterised in that a CCD-target is provided as receiver.

14. A device according to any one of claims 6 to 13, characterised in that the arrangement which ascertains the bite pressure is a pressure sensitive biting film, (27).

15. A device according to claim 14, characterised in that the pressure-sensitive biting film (27) is in the form of a U-shaped bite registration holder.

16. A device according to any one of the preceding claims, characterised by a mouse control (28) and a display, the relative position of the pictures in the form of data sets being changeable with the help of a mouse control (28) and the evaluation of the adjustment being effected by means of a display which shows the data sets, in each case in the superimposed state.

## Revendications

1. Procédé pour la fabrication individuelle d'une prothèse dentaire, en particulier d'une couronne ou d'une partie de dentition, avec utilisation d'un système de détection ce défauts de dentition et d'une machine-outil à commande numérique, les signaux de commande pour la machine-outil étant tirés, avec assistance par ordinateur, du défaut de dentition relevé ou mésuré, caractérisé par les étapes de procédé consistant à:
guider un faisceau de mesure (8) sur une région dentaire à relever et produire chaque fois une représentation tridimensionnelle de régions dentaires dirigées l'une vers l'autre des maxillaires supérieur et inférieur par exploration ponctuelle des coordonnées du plan d'occlusion (plan xy) ou d'un plan de référénce parallèle au plan d'occlusion, ainsi qu'à déterminer les valeurs de hauteur (z ou suivant la direction z) coordonnées aux valeurs de coordonnées x, y,
mémoriser les représentations tridimensionnelles des maxillaires inférieur et supérieur sous la forme de valeurs de hauteur individuelles, correspondant aux coordonnnées x, y, comme premières et deuxièmes données partielles respectivement d'un premier ensemble de données,
explorer suivant deux dimensions des régions dans lesquelles, lors d'une prise d'empreinte du patient, une pression de contact préfixée est dépassée, et mémoriser les valeurs de coordonnées du plan d'occlusion (plan xy) associées à ces régions comme deuxième ensemble de données,
déterminer des régions du plan d'occlusion (plan xy) dans lesquelles les valeurs de hauteur (z ou suivant la direction z) des premières et deuxièmes données partielles du premier ensemble de données, en tenant compte de la direction de mesure utilisée à chaque fois, pour des valeurs de coordonnées x, y identiques, concordent, et mémoriser les valeurs de coordonnées du plan d'occlusion associées à ces régions comme troisième ensemble de données,
superposer autant que possible les données du deuxième et du troisième ensemble de données, de manière que les valeurs du deuxième ensemble coïncident autant que possible complètement avec les valeurs du troisième ensemble de données, en particulier en changeant les coordonnées du plan d'occlusion pour tous les points du deuxième ensemble par rapport aux coordonnées du troisième ensemble de données, les coordonnées des points pour lesquels, après la superposition, les valeurs du deuxième et du troisième ensemble de données coïncident, formant un quatrième ensemble de données, ainsi qu'à compléter des valeurs de hauteur (z ou suivant la direction z) manquantes dans le maxillaire supérieur ou inférieur, dans la région de défauts de dentition, par les valeurs de hauteur correspondantes, pour les coordonnées x, y concernées dans cette région, du maxillaire antagoniste du premier ensemble de données, et mémoriser les valeurs de coordonnées comme cinquième ensemble de données, les valeurs de hauteur se rapportant au plan d'occlusion (plan xy).

2. Procédé selon la revendication 1, caractérisé par l'introduction des coordonnées d'une région du plan d'occlusion dans laquelle existe un défaut de dentition, au moins comme partie du cinquième ensemble de données.

3. Procédé selon la revendication 1 ou 2, caractérisé en ce que les valeurs des deuxième, troisième, quatrième et/ou cinquième ensembles de données sont mémorisées comme des valeurs logiques et sont mises en corrélation, pendant le traitement, par des combinaisons logiques ET.

4. Procédé selon une des revendications 1 à 3, caractérisé en ce que, lors de la superposition de données du deuxième et du troisième ensemble de données, plusieurs troisièmes ensembles de données, produits pour différentes positions relatives des maxillaires supérieur et inférieur, sont comparés l'un après l'autre avec le deuxième ensemble de données, avec sélection, comme quatrième ensemble de données, de celui des troisièmes ensembles de données présentant la concordance maximale des données avec celle du deuxième ensemble.

5. Procédé selon une des revendications 2 à 4, caractérisé par le complètement de valeurs de coordonnées pour des régions du plan d'occlusion, dans lesquelles existe un défaut de dentition, valeurs de coordonnées qui forment un cinquième ensemble de données, par les valeurs de coordonnées d'un modèle de dentition contenue dans un mémoire de modèles, valeurs qui forment un sixième ensemble de données, avec raccordement continu aux valeurs de hauteur mesurées et traitées.

6. Dispositif pour la mise en oeuvre du procédé selon une des revendications précédentes, caractérisé par
un dispositif de mesure avec une unité de pilotage (19) pour guider, en particulier avec balayage, un faisceau de mesure (8) sur une région dentaire à relever et pour produire chaque fois une représentation tridimensionnelle de régions dentaires dirigées l'une vers l'autre des maxillaires supérieur et inférieur par exploration ponctuelle des coordonnées du plan d'occlusion (plan xy) ou d'un plan de référence parallèle au plan d'occlusion, ainsi que pour déterminer les valeurs de hauteur coordonnées (z ou suivant la direction z),
une mémoire de valeurs mesurées (22) pour stocker les représentations tridimensionnelles des maxillaires inférieur et supérieur sous la forme de coordonnées individuelles, correspondant aux points de mesure, respectivement comme des premières et des deuxièmes données partielles d'un premier ensemble de données, un dispositif (27) déterminant la pression de la dentition dans le plan de l'occlusion,
une unité pour la détermination bidimensionnelle de régions du dispositif de détermination de la pression de la dentition dans lesquelles une pression de contact préfixée est dépassée lors d'une prise d'empreinte du patient, et la mémorisation des résultats en fonction des valeurs de coordonnées y, x associées du plan d'occlusion (plan xy) comme deuxième ensemble de données,
une unité de calculateur (25) pour déterminer des régions du plan d'occlusion (plan xy) dans lesquelles les valeurs de hauteur (z ou suivant la direction z) des premières et deuxièmes données partielles du premier ensemble de données, se rapportant respectivement au maxillaire supérieur et au maxillaire inférieur, en tenant compte de la direction de mesure utilisée à chaque fois, concordent pour des valeurs de coordonnées x, y identiques, et pour mémoriser les résultats en fonction des valeurs de coordonnées associées du plan d'occlusion comme au moins un troisième exemple de données dans la mémoire de valeurs mésurées,
une unité d'égalisation pour superposer au moins autant que possible les données du deuxième et du troisième ensemble de données, les valeurs de coordonnées du deuxième ensemble devant coïncider autant que possible complètement avec les valeurs de coordonnées du troisième ensemble, en particulier par le changement des coordonnées x, y du plan d'occlusion pour tous les points du deuxième ensemble par rapport aux coordonnées x, y du troisième ensemble de données, ainsi que
une unité pour compléter des valeurs de hauteur dans le maxillaire supérieur ou inférieur, dans la région de défauts de dentition, par les valeurs de hauteur déterminées dans cette région pour les coordonnées x, y concernées du maxillaire antagoniste du premier ensemble de données, comme cinquième ensemble de données, les valeurs de hauteur se rapportant au plan d'occlusion.

7. Dispositif selon la revendication 6, caractérisé par la prévision d'un dispositif d'entrée pour l'introduction d'une région de coordonnées du plan d'occlusion dans laquelle existe un défaut de dentition.

8. Dispositif selon la revendication 7, caractérisé en ce que l'unité d'égalisation et/ou l'unité pour compléter possèdent des moyens pour la combinaison logique ET des valeurs des deuxième, troisième, quatrième et/ou cinquième ensembles de données comme valeurs logiques mémorisées.

9. Dispositif selon une des revendications 6 à 8, caractérisé par un dispositif d'approximation pour compléter des valeurs de hauteur dans des régions du plan d'occlusion dans lesquelles existe un défaut de dentition, par des valeurs de hauteur correspondantes d'un modèle de dentition contenu dans une mémoire de modèles, avec raccordement continu aux valeurs de hauteur complétées.

10. Dispositif selon une des revendications 6 à 9, caractérisé par un laser pour générer le faisceau de mesure (8).

11. Dispositif selon une des revendications 6 à 9, caractérisé en ce que la longueur d'onde du faisceau de mesure (8) est comprise dans le domaine infrarouge.

12. Dispositif selon une des revendications 6 à 11, caractérisé en ce que des photodétecteurs suivis d'un circuit d'amplification différentielle sont prévus comme récepteur et pour déterminer les valeurs mesurées.

13. Dispositif selon une des revendications 6 à 11, caractérisé en ce qu'une cible à couplage de charge est prévue comme récepteur.

14. Dispositif selon une des revendication 6 à 13, caractérisé en ce que le dispositif pour déterminer la pression de la dentition est une feuille d'occlusion (27) sensible à la pression.

15. Dispositif selon la revendication 14, caractérisé en ce que la feuille d'occlusion (27) sensible à la pression est réalisée comme une fourchette d'occlusion en forme de U.

16. Dispositif selon une des revendications précédentes, caractérisé par une commande par souris (28) et un visuel, la position relative des représentations, sous forme d'ensembles de données, pouvant être changée à l'aide de la commande par souris (28) et l'évaluation de l'égalisation produite s'effectuant au moyen d'un visuel qui présente les ensembles de données chaque fois dans une représentation à superposition.
